Europäisches Patentamt

European Patent Office

Office européen des brevets

(19)

(11) Numéro de publication : **0 071 883**
**B1**

(12) **FASCICULE DE BREVET EUROPÉEN**

(45) Date de publication du fascicule du brevet :
30.12.86

(51) Int. Cl.⁴ : **B 66 F 9/07**, B 65 G 1/04

(21) Numéro de dépôt : **82106826.9**

(22) Date de dépôt : **28.07.82**

(54) Equipement pour la manutention automatique et le stockage de fûts.

(30) Priorité : **04.08.81 FR 8115128**

(43) Date de publication de la demande :
**16.02.83 Bulletin 83/07**

(45) Mention de la délivrance du brevet :
**30.12.86 Bulletin 86/52**

(84) Etats contractants désignés :
**BE DE GB**

(56) Documents cités :
**EP-A- 0 030 111**
**FR-A- 2 187 633**
**FR-A- 2 444 309**
**GB-A- 1 187 260**
**GB-A- 1 312 308**
**GB-A- 2 052 457**
**SU-A- 175 884**
**US-A- 3 534 850**

(73) Titulaire : **Société Industrielle d'Equipement Technique d'Appareils de Manutention SIETAM**
**42-48 Avenue du Président Kennedy**
**F-91170 Viry Chatillon (FR)**

(72) Inventeur : **Stenac, Jean-Paul**
**4 Rue Tardieu**
**F-75018 Paris (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

Jouve, 18, rue St-Denis, 75001 Paris, France

## Description

La manutention et le stockage de fûts, en particulier dans les chais de vieillissement d'alcool, présentent des problèmes spécifiques en raison de la compacité recherchée, du groupage par lots de qualité ou d'âge, les précautions à observer pour la manutention.

Le stockage s'effectuait jusqu'à présent le plus souvent par empilage à partir du sol ou par stockage dans des canaux superposés de structures métalliques. La manutention était généralement manuelle ou faite à l'aide de chariots à fourche, ce qui était une source d'accidents matériels ou humains.

L'invention a pour but une installation qui permet d'opérer la manutention et le stockage de fûts d'une façon complètement automatique à partir d'un poste de commande fixe au sol.

Cette installation comprend d'une façon connue, une ou plus généralement deux structures de stockage métalliques constituant des canaux superposés où les fûts peuvent être disposés et stockés, et entre ces deux structures un couloir de manutention dans lequel peut circuler entre deux rails, l'un inférieur, l'autre supérieur, un transporteur équipé d'une fourche susceptible d'être mue en hauteur de façon à amener un fût devant un quelconque canal de stockage. La fourche est équipée d'une table tournante à galets de guidage et d'entraînement, associée à un chariot susceptible de pénétrer à l'intérieur du canal en roulant sur des rails qui reçoivent directement les fûts à stocker. Les manœuvres de la table en orientation et du chariot en distance s'effectuent d'un poste fixe, éloigné, rendant inutile toute présence humaine au lieu de stockage.

Un tel système, entièrement automatique, élimine les problèmes de sécurité du personnel et réduit les risques d'incendie.

Les rails de roulement du chariot dans les canaux sont ceux qui supportent les fûts stockés, ce qui permet l'utilisation des structures de stockage existantes ou nouvelles.

De façon précise, le but de l'invention est d'éviter l'emploi de palettes ou autres plates-formes de support afin de manutentionner directement les fûts et de les stocker sur deux profilés parallèles servant également de rails de roulement, comme il est usuel.

En raison de la forme bitronconique des fûts, la partie centrale descend en dessous du niveau de la surface de support des rails, ce qui nécessite que la partie du chariot assurant la prise descende en dessous de ce niveau.

Dans la solution connue du brevet français FR-A-2 187 633, correspondant au préambule de la revendication 1, pour abaisser la plate-forme du chariot dans sa position basse au moyen d'un vérin, il faut que le châssis dudit chariot repose notablement en dessous du niveau des bords supérieurs des poutres sur lesquelles la charge doit être placée. Dans une telle solution et s'agissant de fûts, la prise en compte de l'épaisseur de la plate-forme et du niveau inférieur de la partie centrale du fût, entraîne l'obligation pour le châssis 57 à déborder largement en dessous des rails de support, et il n'est pas satisfaisant que la hauteur utile soit réduite de la hauteur de passage du châssis en dessous des rails.

La présente invention permet d'obvier à cet inconvénient ; elle est caractérisée notamment par le fait que la plate-forme est équipée de tronçons de rails relevables permettant de faire la jonction entre la plate-forme et les rails fixes des canaux et que pour la dépose ou la prise d'un fût sur les rails du canal, le chariot de stockage 10 comporte à l'avant une fourche 35 à bras basculants, cette fourche étant disposée en porte-à-faux par rapport au châssis 27 dudit chariot, et étant susceptible de descendre au-dessous du niveau des rails 18' pour passer en dessous du fût pour charger ou décharger ce dernier.

Ainsi, vis-à-vis de la technique antérieure, l'invention réside en un chariot de stockage équipé d'une fourche susceptible de soulever, puis de déposer des fûts sur des rails longitudinaux espacés servant de rails de roulement au chariot.

Le système selon l'invention n'entraîne aucune perte de hauteur puisque seule la fourche basculante dont est équipé le chariot pénètre sous le fût dans des espaces disponibles le long du rail.

La table tournante, en raison de portions de rails abattants, assure une liaison simple avec la structure de stockage. La voie de roulement du chariot est donc continue et indépendante des tolérances de montage de la structure.

La fourche basculante assure le serrage des fûts au moment de la dépose.

L'invention sera maintenant décrite en se référant à titre d'exemple à une forme de réalisation représentée au dessin annexé, dans lequel :

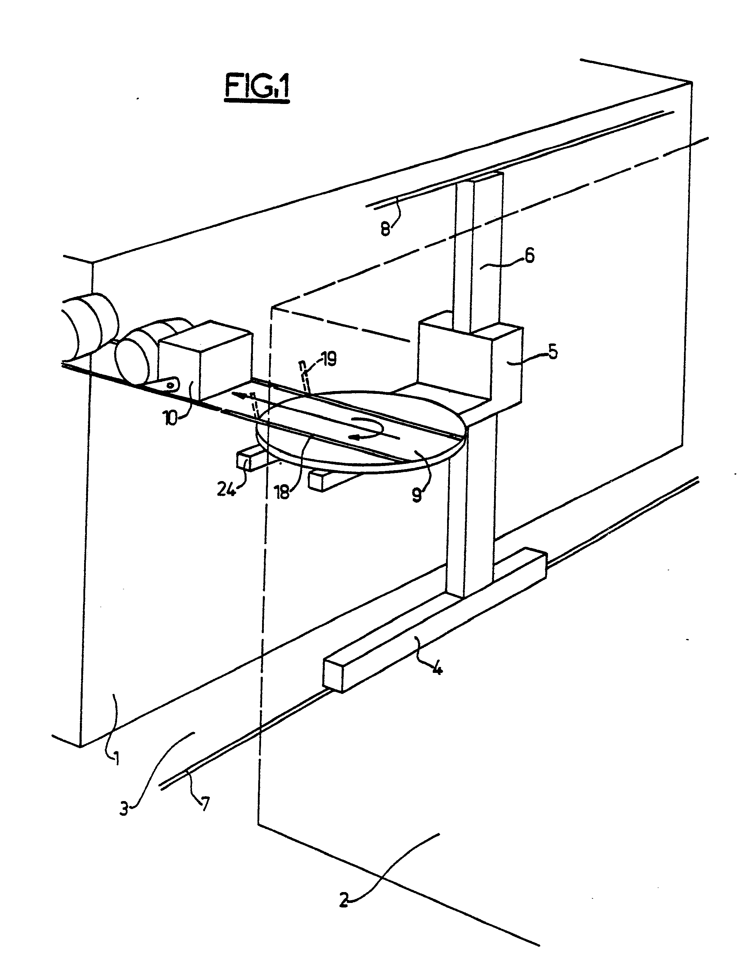

là figure 1 est une vue schématique cavalière de l'ensemble de l'installation ;

la figure 2 est une vue schématique en plan de l'installation à une échelle plus réduite ;

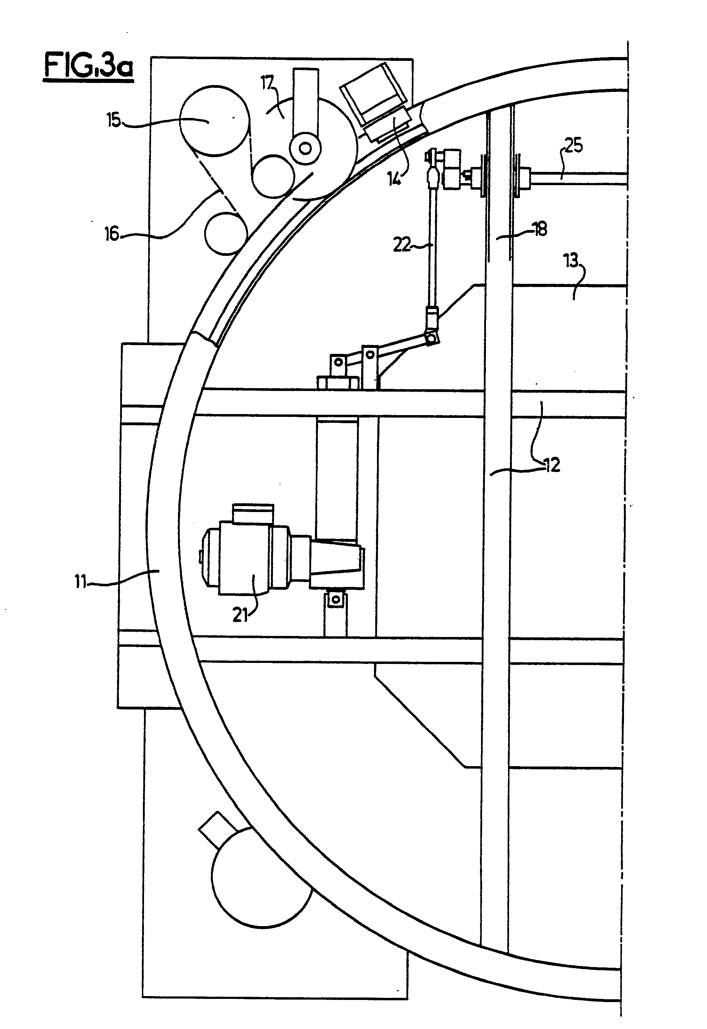

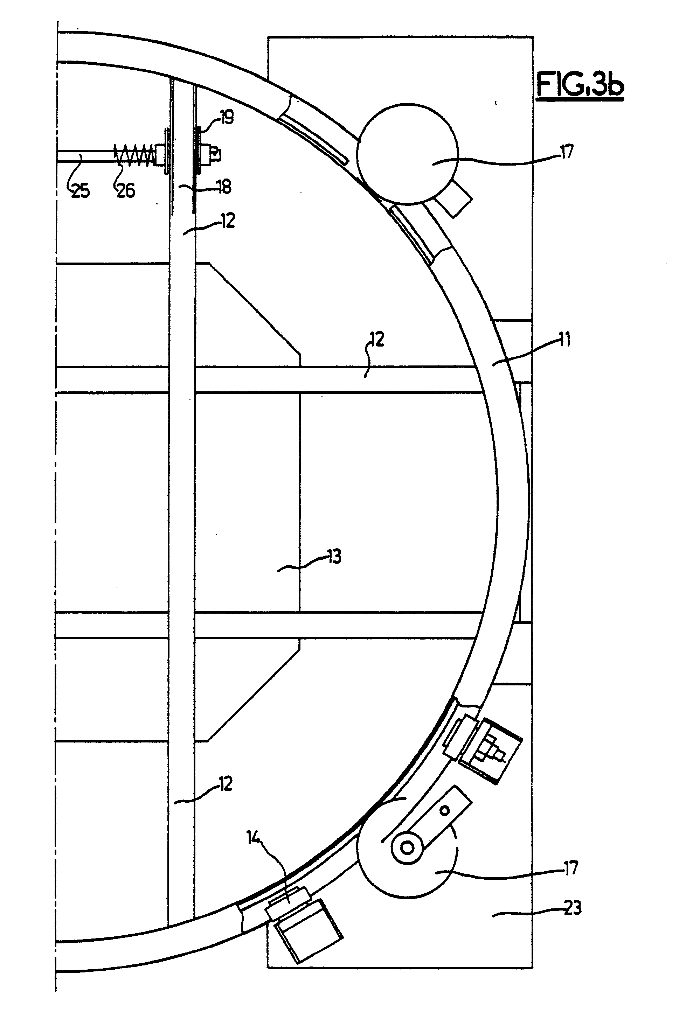

les figures 3a et 3b sont des vues en plan respectivement de la partie gauche et de la partie droite de la plate-forme ;

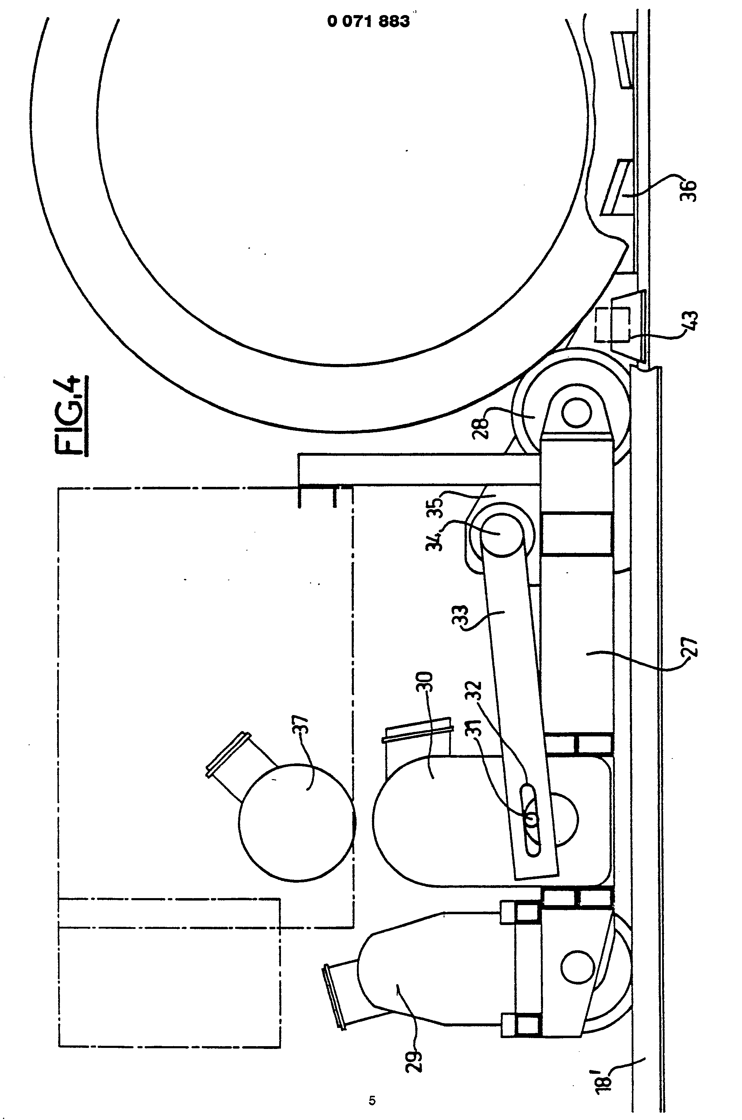

la figure 4 est une vue en élévation du chariot ;

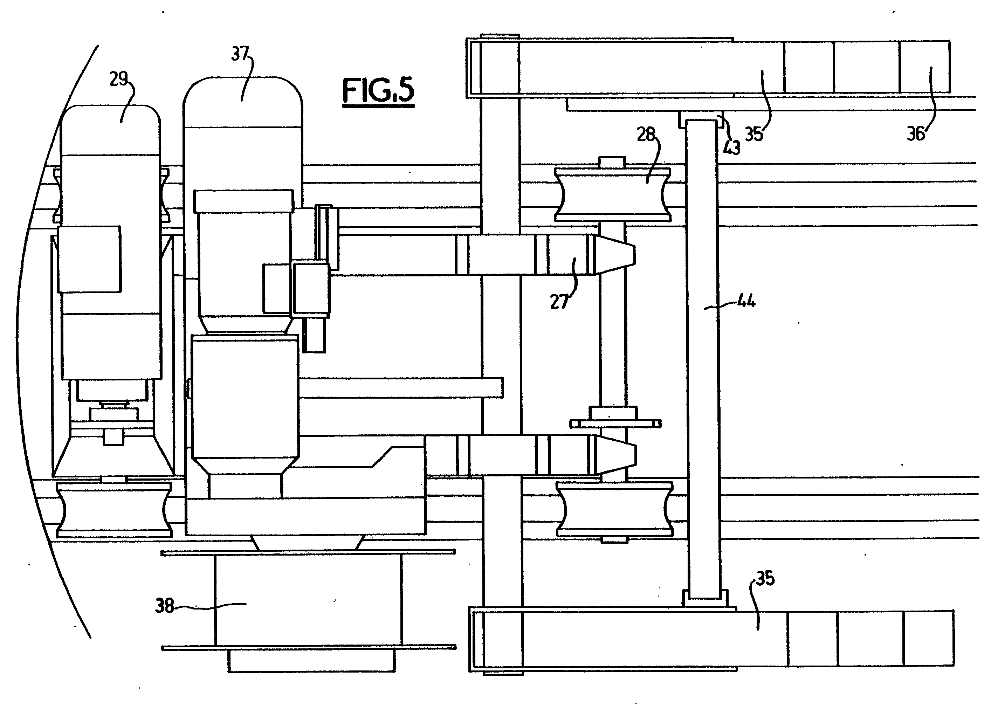

la figure 5 est une vue en plan du chariot de stockage ;

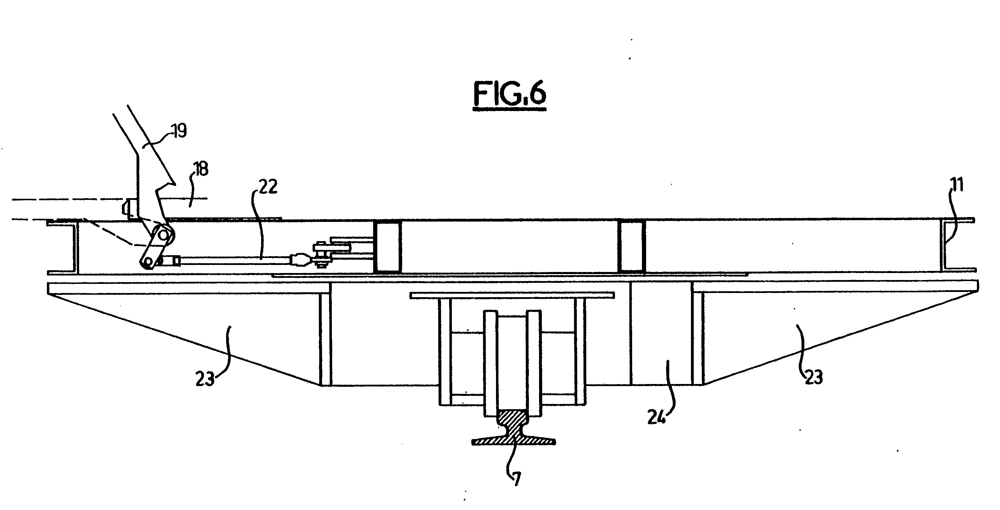

la figure 6 est une coupe verticale de la table en position basse.

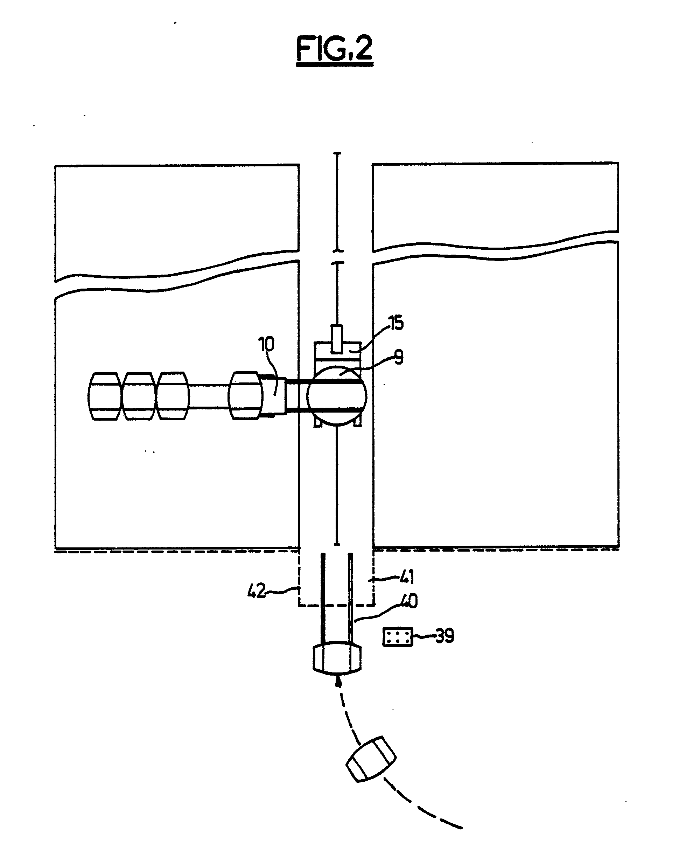

La disposition générale de l'installation est représentée schématiquement aux figures 1 et 2 ; elle comporte :

deux blocs de stockage 1 et 2 divisés chacun en canaux sur plusieurs étages, et séparés par une allée de manutention 3 ;

un dispositif transporteur 4 circule dans cette allée et comporte une fourche 5 pouvant se déplacer en hauteur le long d'un mât 6 ; il est guidé par des rails horizontaux inférieur 7 et supérieur 8.

Selon l'invention, la fourche du transporteur est équipée d'une table tournante 9, avec laquelle coopère un chariot 10 destiné à pénétrer dans les canaux pour y déposer ou y prélever des fûts.

La table tournante est constituée d'un anneau métallique 11 entretoisé par des poutres 12, renforcées par une plaque centrale 13. L'anneau est soutenu par des galets de roulement 14 sur lesquels il repose par son bord supérieur, et il est entraîné en rotation à partir d'un moteur 15 par une chaîne sans fin 16, des galets de guidage 17 maintenant l'anneau en place.

Deux poutres parallèles 12 reçoivent des rails 18 sur lesquels se déplace le chariot de stockage 10. En bout de ces rails sont montés des tronçons de rails 19 mobiles pouvant être relevés ou abaissés, pour permettre le déplacement du chariot, et commandés par un moteur 21 et une timonerie 22.

Les galets et le moteur 15 sont disposés sur des consoles 23, fixées par paires sur chacune des branches 24 de la fourche 5. L'axe 25 de commande des tronçons de rail 19 comporte un ressort 26 servant à supporter élastiquement la charge au passage du chariot 10.

Ce dernier est constitué d'un châssis métallique 27 supporté par deux paires de galets 28 roulant sur les rails 18 ou leurs prolongements 18' dans les canaux ; il supporte d'arrière en avant un moteur électrique 29 agissant par chaîne sur les deux arbres portant les galets pour déplacer le chariot, un moteur de levage 30 agissant par engrenage sur un excentrique 31 ; le doigt d'excentrique est engagé dans la fente 32 d'un levier 33 agissant sur un axe 34, qui supporte à ses extrémités des bras 35 munis de patins 36 destinés à s'engager de part et d'autre des rails ; enfin, un moteur 37 actionne un enrouleur 38 qui reçoit le câble électrique reliant les moteurs électriques énoncés, avec la source d'énergie par l'intermédiaire de la table tournante à laquelle le câble est raccordé.

A l'entrée de l'allée centrale 3 se trouve (fig. 2) le pupitre de commande 39, un tronçon de rails fixes 40 par lequel chaque fût est amené ou retiré à l'intérieur d'une cage 41, où le chariot peut venir le saisir ou le déposer. Une porte automatique 42 isole le fût pendant la manœuvre.

Le fonctionnement est le suivant :

Par exemple, pour une entrée en stock, le fût est amené manuellement ou par un chariot sur la voie d'entrée 40 et il est poussé à l'intérieur de la cage protectrice 41. L'opérateur affiche sur le pupitre le numéro du canal à remplir, et l'indication de stockage.

Le chariot transporteur 4 vient en bout de l'allée et présente la table tournante en position basse et orientée vers la voie d'entrée 40. Les rails 19 s'abaissent et le chariot de stockage 20 pénètre sur la voie d'entrée, la fourche 35 étant en position basse. Lorsque les bras de la fourche sont engagés sous le fût, le chariot s'arrête et lève les fourches. Le chariot revient sur la table tournante, en même temps la porte de la cage 41 se ferme et les rails 19 se relèvent.

Le transporteur 4 se déplace tout en amenant la fourche 24 à la hauteur convenable correspondant au canal désigné, et la table effectue une rotation d'un quart de tour pour se placer face au bloc correspondant. La table étant en place et arrêtée, les rails s'abaissent et le chariot pénètre dans le canal jusqu'à ce qu'il détecte le premier fût situé dans le canal ou l'extrémité du canal. Le chariot s'arrête et abaisse sa fourche jusqu'à ce que le fût vienne reposer directement sur les rails 18. A ce moment, le chariot recule et revient sur la table tournante, les rails 19 se relèvent et le chariot est prêt pour une nouvelle opération.

Pour le fonctionnement en prélèvement d'un fût en stock, la séquence des opérations est identique mais inversée.

D'une façon avantageuse, le chariot est également équipé de manière à placer ou enlever un tasseau de bois formant cale sur les rails et empêcher ainsi le fût de se déplacer.

A cet effet, chaque bras de la fourche du petit chariot est équipé d'un petit support 43 dirigé perpendiculairement au rail 18. Ces supports sont destinés à poser ou à enlever un tasseau 44.

Toutes les commandes automatiques s'effectuent au moyen d'éléments électriques, tels que contacts de fin de course, palpeurs, commutateurs de fin de course et autres bien connus du praticien. Aussi, leur disposition n'a pas été autrement décrite ni représentée, car elle ne fait pas partie de ce qui est considéré comme l'invention, qui découle des revendications.

## Revendications

1. Equipement pour la manutention automatique de fûts, comportant une ou deux structures de stockage (1, 2) constituant des rangées de canaux contigus, superposés, se faisant face de part et d'autre d'une allée centrale (3), dans laquelle peut se déplacer un transporteur (4) équipé d'une fourche (5) mobile verticalement, munie d'une plate-forme ou table tournante (9) comportant des rails (18) pour le déplacement automatique d'un chariot de stockage (10) sur lesdits rails de la plate-forme et sur des rails (18') disposés le long des canaux de stockage, caractérisé par ceci que la plate-forme est équipée de tronçons de rails relevables (19) permettant de faire la jonction entre la plate-forme et les rails fixes des canaux et que pour la dépose ou la prise d'un fût sur les rails du canal, le chariot de stockage (10) comporte à l'avant une fourche (35) à bras basculants, cette fourche étant disposée en porte-à-faux par rapport au châssis (27) dudit chariot, et étant susceptible de descendre au-dessous du niveau des rails (18') pour passer en dessous du fût pour charger ou décharger ce dernier.

2. Equipement selon la revendication 1, caractérisé par ceci que les bras de la fourche sont équipés de supports (43) destinés à la mise en place ou au retrait de tasseaux (44) servant de cale au fût.

3. Equipement selon la revendication 1, caractérisé par ceci que le mouvement des bras basculants de la fourche assure le serrage des charges en même temps que leur dépose.

**Claims**

1. Equipment for the automatic handling of barrels which comprises one or two storage structures (1, 2) constituting rows of superposed contiguous channels facing one another on opposite sides of a central lane (3) in which a conveyor (4) is adapted to move, which conveyor is equipped with a vertically movable fork (5) provided with a platform or turntable (9) having rails (18) for the automatic displacement of a storage truck (10) on said rails of the platform and on rails (18') disposed along the storage channels, characterized in that the platform is equipped with raisable rail portions (19) enabling a connection to be made between the platform and the fixed rails of the channels, and that for the setting down or picking up of a barrel on the rails of the channel the storage truck (10) is provided at the front with a fork (35) which is provided with rocking arms and which is overhung in relation to the frame (27) of said truck and is adapted to move down below the level of the rails (18') in order to pass underneath the barrel in order to load or unload the latter.

2. Equipment according to Claim 1, characterized in that the arms of the fork are equipped with supports (43) intended for placing in position or removing cleats (44) serving as checks for the barrels.

3. Equipment according to Claim 1, characterized in that the movement of the rocking arms of the fork effects the gripping of the loads at the same time as their setting down.

**Patentansprüche**

1. Vorrichtung zur automatischen Förderung von Fässern, mit einer oder zwei Lagerkonstruktionen (1, 2) bestehend aus Reihen von aneinandergrenzenden, übereinander liegenden Kanälen, die einander beiderseits eines Mittelgangs (3) gegenüberliege in dem ein Förderer (4) mit einer vertikal beweglichen Gabel (5) läuft, die mit einer Bühne bzw. Drehscheibe (9) mit Schienen (18) zwecks automatischer Bewegung eines Lagerwagens (10) auf den genannten Schienen der Bühne und auf entlang der Lagerkanäle angeordneten Schienen (18') versehen ist, dadurch gekennzeichnet daß die Bühne mit hochklappbaren Schienenstücken (19) ausgerüste ist, die die Verbindung zwischen der Bühne und den festen Schienen in den Kanälen ermöglichen, und daß der Lagerwagen (10) zwecks Ablegen bzw. Aufnehmen eines Fasses auf bzw. von den Schienen des Kanals vorne eine Gabel (35) mit schwenkbaren Armen trägt, wobei diese Gabel gegenüber dem Rahmen (27) des genannten Wagens freitragend angeordnet ist und unterhalb der Höhe der Schienen (18') abgesenkt werden kann, um unter das Faß greifen zu können und dieses aufzunehmen bzw. abzulegen.

2. Vorrichtung gemäß Anspruch 1, dadurch gekennzeichnet, daß die Arme der Gabel mit Haltern (43) ausgerüstet sind die zum Setzen und Rückzug von zum Feststellen des Fasses dienenden Balken bestimmt sind.

3. Vorrichtung gemäß Anspruch 1, dadurch gekennzeichnet, daß die Bewegung der schwenkbaren Arme der Gabel das Einspannen der Lasten gleichzeit mit deren Ablegen sicherstellt.

## FIG.1

## FIG.2

FIG.3a

FIG.3b

4

FIG.4

FIG.5

36

35

43

44

28

27

37

29

38

35

# FIG.6

0 071 883